# EUROPÄISCHE PATENTSCHRIFT

(11) **EP 3 584 545 B1**
(45) Veröffentlichungstag und Bekanntmachung des Hinweises auf die Patenterteilung: **13.10.2021**
(21) Anmeldenummer: 19181260.1
(22) Anmeldetag: 19.06.2019
(51) Int. Cl.: G01F 23/20, B05B 7/24, G01G 13/26, G01G 17/04

(54) **VORRICHTUNG ZUR MENGENDOSIERTEN SPRÜHSTOFFABGABE IN FORM EINES SPRAYS**
DEVICE FOR DOSED SPRAY DELIVERY IN THE FORM OF A SPRAY
DISPOSITIF DE SORTIE DE PRODUIT PULVÉRISÉ À DOSAGE DE QUANTITÉ SOUS LA FORME D'UN PULVÉRISATEUR

(30) Priorität: 19.06.2018 DE 102018209858
(43) Veröffentlichungstag der Anmeldung: 25.12.2019
(73) Patentinhaber: WAHL Engineering GmbH, 56170 Bendorf/Rhein (DE)
(72) Erfinder: Wahl, Jürgen, 56170 Bendorf/Rhein (DE)
(74) Vertreter: Rösler, Uwe

(56) Entgegenhaltungen:
- WO-A1-97/14505
- DE-C- 81 393
- US-A1- 2007 102 545
- US-A1- 2013 269 807
- US-A1- 2017 210 574

## Beschreibung

### Technisches Gebiet

Die Erfindung bezieht sich auf eine Vorrichtung zur mengendosierten Sprühstoffabgabe eines flüssigviskosen Stoffes, der mittels einer Sprühstoffdüse in Form eines Sprays emittierbar ist, mit einem Behälter, in dem der flüssigviskose Stoff bevorratet ist, einem in oder an dem Behälter angebrachten Messgerät zur Bestimmung der Gewichtskraft des in dem Behälter bevorrateten flüssigviskosen Stoffes sowie zum Erzeugen wenigstens eines von der Gewichtskraft abhängigen Messwertes, wenigstens einer aus dem Behälter führenden Leitung, die derart ausgebildet und angeordnet ist, so dass durch die Leitung der in dem Behälter bevorratete flüssigviskose Stoff Druck-getrieben mittel- oder unmittelbar der Sprühstoffdüse zuführbar ist, und mit einer Auswerte- und Regel-/Steuereinheit, die auf der Grundlage des wenigstens einen Messwertes oder einer von diesem abgeleiteten Größe eine Einheit zur Einstellung des Druckes aktiviert.

### Stand der Technik

Mengendosierte Sprühstoffabgaben kommen u.a. in materialbearbeitenden Prozessen zum Einsatz, bei denen spanabhebende Werkzeuge in Eingriff mit zu bearbeitenden Werkstücken oder Werkstückoberflächen kommen. Um den Materialabtragungsprozess hinsichtlich Effizienz und Werkzeugverschleiß zu optimieren wird am Ort der Ineingriffnahme zwischen Werkzeug und Werkstück flüssiges oder fließfähiges Schmiermittel appliziert, das zur Kühlung und Schmierung dient. Neben der Wahl des Schmiermittels kommen sowohl der Mengendosierung als auch der räumlichen Verteilung der Sprühstoffabgabe des zu applizierenden Schmiermittels große Bedeutungen zu.

Zum Zwecke der räumlich verteilten Sprühstoffabgabe ist eine Reihe von Schmiermitteldüsen-Anordnungen bekannt, die ein Schmiermittelaerosol bzw. -spray erzeugen, vorzugsweise in Form eines Öl/Luft-Sprays oder Öl/Wasser/Luft-Sprays, das möglichst zielgerichtet zum Zwecke der Schmierung und Kühlung an Kühlmittelschmierorte lokal appliziert wird, an denen das jeweils spanende oder umformende Werkzeuge auf das Werkstück einwirkt.

Die Vornahme der Mengendosierung des zu applizierenden Schmiermittels hängt zudem von einer Vielzahl von Prozessparametern ab, bspw. von der Materialart, der Dichte des zu bearbeitenden Werkstückes, der Wahl des Werkzeuges, dem Anpressdruck sowie der Relativbewegung und -geschwindigkeit zwischen Werkzeug und Werkstück, um nur einige zu nennen. Sowohl ein Zuviel als auch ein Zuwenig an appliziertem Schmiermittel sind dem spanabhebenden Prozess abträglich, vielmehr bedarf es einer individuellen Feindosierung, um ein optimales Bearbeitungsergebnis zu erzielen.

Für eine zuverlässige Mengendosierung bedarf es der Erfassung der Schmiermittelmenge, die am Ort der Sprühstoffabgabe emittiert bzw. appliziert wird. Hierfür bieten sich unterschiedliche Messverfahren an, mit denen beispielsweise das geförderte Volumen oder die Strömungsgeschwindigkeit, mit der eine Schmiermittelströmung durch eine Leitung strömt, meßbar sind.

Aus der Druckschrift DE 41 06 995 A1 ist eine Messvorrichtung für Flüssigkeitsströme zu entnehmen, bei der ein Flüssigkeitsstrom in eine Messkammer in Art einer Siphon-Anordnung geleitet wird. Der zu erfassende Volumenstrom der Flüssigkeitsströmung wird durch Unterteilung in jeweils gleich dimensionierte, durch die Siphon-Anordnung festgelegte Messvolumina vorgenommen, wobei die Anzahl der über die Siphon-Anordnung abfließenden, jeweils identischen Messvolumina detektiert und hieraus das gesamte Volumen des Flüssigkeitsstromes ermittelt werden. Der für die Zählung der einzelnen Messvolumina verwendete Detektor ist vorzugsweise als optischer oder Ultraschall-Sensor ausgebildet. Durch die messtechnisch bedingte Portionierung des zu vermessenden Flüssigkeitsstromes eignet sich dieses Verfahren nicht für kontinuierlich fließende Flüssigkeitsströme.

Eine Einrichtung zum Messen von Flüssigkeitsmengen ist darüber hinaus in der Druckschrift DE 38 87 792 T2 beschrieben, bei der mit Hilfe einer Lastzelle das Gewicht eines in einem Tank enthaltenen, fließfähigen Rohmaterials ermittelt wird. Das Messsignal der Lastzelle dient einer Regelung eines Servoventil, über das eine aus dem Tank ausfließende Rohmaterialmenge einstellbar ist.

Darüber hinaus sind Durchflussmesssensoren bekannt, die den Volumendurchfluss durch Messen der Fließgeschwindigkeit eines Mediums durch eine Leitung mit einem bekannten Leitungsquerschnitt erfassen. Konventionelle Durchflusssensoren eignen sich jedoch nicht zur exakten Erfassung sehr langsam fließender Medien.

Die Druckschrift WO 1997/14505 A1 offenbart eine Flüssigkeitsmengendosierung für Farbstoffsprühanwendungen, mit einem druckbeaufschlagten Behälter, aus dem die Farbe mengendosiert zur Ausbildung eines Sprays ausgetragen wird. Die Mengendosierung basiert auf einer Gewichtsmessung der aus dem Behälter ausströmenden Farbstoffmenge.

Die Druckschrift DE298 04 955 U1 beschreibt ein Dosiergerät für ein pulverförmiges Kolbenschmiermittel, das zur Dosierung ein Venturi-Düsensystem nutzt, das durch einen Pneumatikzylinder mit Schieber geregelt wird.

Die Druckschrift DE 10 2012 224 287 A1 offenbart eine Düsenvorrichtung zum Zerstäuben einer Ölschmiere an einer Kühl- und Schmiermittelkanalinnenwand eines Kühlkanals eines Werkzeuges.

Schließlich beschreibt die Druckschrift DE 43 25 836 A1 eine Vorrichtung zum Austragen einer fließfähigen Masse, vorzugsweise in Form einer Primer-Flüssigkeit, die in einem Vorratsbehälter bereitgestellt wird, dessen Füllgewicht mittels einer Wägezelle gemessen wird, um rechtzeitig vor einer vollständigen Entleerung für die Bereitstellung eines frisch gefüllten Vorratsbehälter zu sorgen, so dass der Austragevorgang nicht unterbrochen werden muss.

Eine gattungsgemäße Vorrichtung zur mengendosierten Sprühstoffabgabe eines flüssigviskosen Stoffes ist in der Druckschrift US 2013/0269807 A1 beschrieben, bei der mittels einer Sprühstoffdüse der flüssigviskose Stoff in Form eines Sprays ausgetragen wird. Die Vorrichtung umfasst einen Behälter, in dem der flüssigviskose Stoff bevorratet ist, ein in oder an dem Behälter angebrachtes Messgerät zur Bestimmung der Gewichtskraft des in dem Behälter bevorrateten flüssigviskosen Stoffes sowie zum Erzeugen wenigstens eines von der Gewichtskraft abhängigen Messwertes, wenigstens eine aus dem Behälter führende Leitung, die derart ausgebildet und angeordnet ist, so dass durch die Leitung der in dem Behälter bevorratete flüssigviskose Stoff Druck-getrieben mittel- oder unmittelbar der Sprühstoffdüse zuführbar ist. Ferner sind eine Auswerte- und Regel-/Steuereinheit, die auf der Grundlage des wenigstens einen Messwertes oder einer von diesem abgeleiteten Größe eine Einheit zur Einstellung des Druckes aktiviert, eine Druckkammer vorgesehen, in der ein gegenüber eines atmosphärischen Umgebungsdruckes erhöhter, einstellbarer Kammerdruck herrscht und in der der Behälter mit dem flüssigviskosen Stoff angeordnet ist vorgesehen, wobei die wenigstens eine Leitung mechanisch zum Behälter entkoppelt an der Druckkammer derart angebracht ist und diese durchragt, so dass durch die Leitung der in dem Behälter innerhalb der Druckkammer bevorratete flüssigviskose Stoff kammerdruckgetrieben mittel- oder unmittelbar der Sprühstoffdüse zuführbar ist.

### Darstellung der Erfindung

Der Erfindung liegt die Aufgabe zugrunde eine Vorrichtung zur mengendosierten Sprühstoffabgabe eines flüssigviskosen Stoffes, der mittels einer Sprühstoffdüse in Form eines Sprays emittierbar ist, mit einem Behälter, in dem der flüssigviskose Stoff bevorratet ist, einem in oder an dem Behälter angebrachten Messgerät zur Bestimmung der Gewichtskraft des in dem Behälter bevorrateten flüssigviskosen Stoffes sowie zum Erzeugen wenigstens eines von der Gewichtskraft abhängigen Messwertes, wenigstens einer aus dem Behälter führenden Leitung, die derart ausgebildet und angeordnet ist, so dass durch die Leitung der in dem Behälter bevorratete flüssigviskose Stoff Druck-getrieben mittel- oder unmittelbar der Sprühstoffdüse zuführbar ist, und mit einer Auswerte- und Regel-/Steuereinheit, die auf der Grundlage des wenigstens einen Messwertes oder einer von diesem abgeleiteten Größe eine Einheit zur Einstellung des Druckes aktiviert, derart weiterzubilden, dass die Mengendosierung während eines kontinuierlichen Sprühstoffaustrages kontrolliert, quantifizierbar und autonomer durchgeführt werden soll.

Die Lösung der der Erfindung zugrunde liegenden Aufgabe ist im Anspruch 1 angegeben. Den Erfindungsgedanken in vorteilhafter Weise weiterbildende Merkmale sind Gegenstand der Unteransprüche sowie der weiteren Beschreibung sowie der weiteren Beschreibung insbesondere unter Bezugnahme auf die illustrierten Ausführungsbeispiele zu entnehmen.

Lösungsgemäß zeichnet sich die Vorrichtung zur mengendosierten Sprühstoffabgabe eines flüssig viskosen Stoffes, d.h. eines fließfähigen Stoffes, der mittels einer Sprühstoffdüse in Form eines Sprays emittierbar ist, nach den Merkmalen des Oberbegriffes des Anspruches 1 dadurch aus,
dass das Messgerät in oder an der Druckkammer derart angebracht ist, so dass das Messgerät ausschließlich die Gewichtskraft des Behälters und die des darin bevorrateten Stoffes bestimmt Zudem tritt fluiddicht durch die Druckkammer eine Füllleitung, die einerseits in den Behälter mündet und andererseits in Art eines Steigrohrs in den innerhalb eines Druckbehälter bereitgestellten flüssigviskosen Stoff mündet.

Insbesondere die Verwendung der lösungsgemäßen Vorrichtung zur mengendosierten und räumlich gerichteten Ausbringung eines flüssig viskosen Stoffes in Form eines Kühlmittelsprays zum Zwecke der Kühlung und Schmierung eines Span abhebenden Werkzeuges während einer Werkstückbearbeitung erfordert einen kontinuierlichen, kontrolliert mengendosierten Sprühmittelaustrag, um Werkzeug- und werkstückseitige Beschädigungen zu vermeiden. Zum Zwecke einer kontinuierlichen Sprühstoffabgabe wird der in dem Behälter bevorratete flüssig viskose Stoff, vorzugsweise in Form eines Mineralöls, durch eine einseitig offen in den flüssig viskosen Stoff innerhalb des Behälters mündende Leitung, in Form einer Hohlleitung, Druck-getrieben gefördert.

Zum Zwecke der kontrollierten Mengendosierung wird das Gewicht des innerhalb des Behälters bevorrateten flüssig viskosen Stoffes messtechnisch erfasst. Hierzu sitzt der Behälter samt des darin bevorrateten flüssig viskosen Stoffes auf einem Messgerät zur Gewichtserfassung auf, vorzugsweise in Form einer Last- oder Wägezelle. Insbesondere für die Erfassung von vermittels der Sprühstoffabgabe zu applizierenden bzw. emittierenden Minimalmengen, d.h. einige ml/h vermag das Messgerät eine Gewichtsmessung zumindest Gramm-genau, vorzugsweise hundertsel Gramm genau vorzunehmen.

Während der Sprühstoffabgabe wird der Behälter, der eine bestimmt vorgebbare Menge an flüssig viskosem Stoff umfasst, entleert. Durch die messtechnisch erfassbare Gewichtsänderung, d.h. Gewichtsabnahme pro Zeit, ist der Mengendurchfluss des durch die Leitung abgeführten hochviskosen Stoffes exakt bestimmbar. Die von dem Messgerät erzeugten Messwerte werden hierzu drahtlos oder drahtgebunden an eine Auswerteeinheit, vorzugsweise in Form einer programmierbaren Recheneinheit übertragen, in der aktuell ausgetragene Stoffmengen ermittelt werden. Die Mengenbestimmungen können kontinuierlich oder jeweils nach entsprechend vorgegebenen Zeitintervallen vorgenommen werden.

Mit Hilfe einer geeignet sensibel messenden Last- oder Wägezelle lassen sich auf so geringfügige Gewichtsänderungen pro Zeiteinheit erfassen, so dass Minimalmengen dosierte Sprühstoffabgaben, die mit Fördergeschwindigkeiten längs der Leitung von wenigen Millimetern oder Zentimetern pro Stunde einhergehen, exakt überwachbar und kontrollierbar sind. Auf diese Weise lassen sich Minimalmengen bspw. von einem oder wenigen hundertsel Gramm pro Minute realisieren. Um die hochgenaue Gewichtsmessung von äußeren Einflüssen möglichst unbeeinflusst durchführen zu können, bietet es sich vorzugsweise an den Behälter samt Messgerät schwingungsarm zu lagern. Vorzugsweise ist die Druckkammer, in der der Behälter samt Messgerät enthalten sind, auf schwingungsdämpfenden Elementen gelagert.

Der Auswertung der Messwerte liegt vorzugsweise eine Zielfunktion zugrunde, in der beispielsweise eine Information über eine Soll-Mengendosierung erfasst ist. Bei möglichen auftretenden Abweichungen zwischen dem erfassten Ist-Mengendurchsatz und dem vorgegebenen Soll-Mengendurchsatz werden mit Hilfe einer mit der Auswerteeinheit verbundenen Regel-/Steuereinheit Aktivierungssignale generiert, vermittels der die Einheit zur Druckeinstellung bzw. Nachjustierung des Druckes, durch den der flüssig viskose Stoff durch die Leitung getrieben wird, entsprechend aktiviert wird.

Der im Behälter bevorratete flüssig-viskose Stoff wird vermittels eines innerhalb der Druckkammer vorgebbaren Überdruckes durch die einseitig offen in den Behälter mündende Leitung gefördert, an deren Leitungsende eine Sprühstoffdüse angebracht ist. Eine Erläuterung eines derartigen Ausführungsbeispiels ist der weiteren Beschreibung unter Bezugnahme auf die nachstehenden Figuren zu entnehmen.

### Kurze Beschreibung der Erfindung

Die Erfindung wird nachstehend ohne Beschränkung des allgemeinen Erfindungsgedankens anhand eines Ausführungsbeispiels unter Bezugnahme auf die Zeichnung exemplarisch beschrieben. Es zeigt:
- Fig. 1: schematisierte Skizze einer Vorrichtung zur druckbeaufschlagten, mengendosierten Sprühstoffabgabe und
- Fig. 2: wie Figur 1 jedoch mit mehr als einem Behälter innerhalb der Druckkammer.

### Wege zur Ausführung der Erfindung, gewerbliche Verwendbarkeit

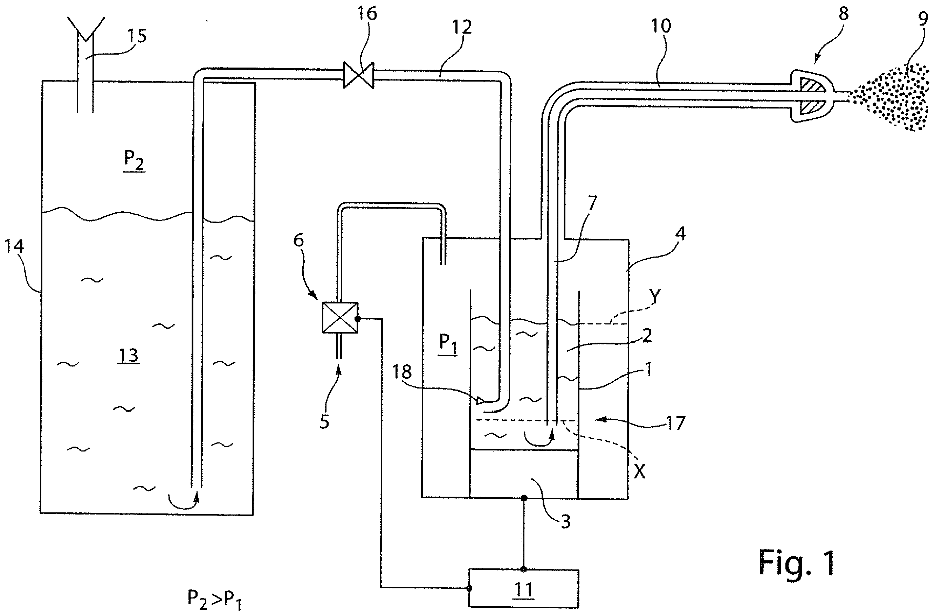

Figur 1 zeigt eine schematisierte Darstellung einer lösungsgemäßen Vorrichtung mit einem Behälter 1, in dem ein flüssig viskoser Stoff 2 bevorratet ist. Der flüssig viskose Stoff 2 ist grundsätzlich fließfähig und besteht vorzugsweise aus einem Mineralöl oder einer im Vergleich zu Ölen nieder viskosen Flüssigkeit. Der Behälter 2 lagert auf einem Messgerät 3, das vorzugsweise in Form einer Last- bzw. Wägezelle ausgebildet ist und das Gewicht des Behälters 1 samt des darin befindlichen flüssig viskosen Stoffes 2 erfasst.

Der Behälter 1 samt des darin befindlichen flüssig-viskosen Stoffes 2 sowie das Messgerät 3 befinden sich innerhalb einer Druckkammer 4, in der ein Kammerdruck p₁ herrscht, der größer ist als der die Druckkammer 4 umgebende atmosphärische Umgebungsdruck. Der innerhalb der Druckkammer 4 herrschende Kammerdruck p₁ ist über eine externe Drucklufteinspeisung 5, die mit Hilfe einer vorzugsweise als Proportionalregelventil ausgebildete Einstelleinheit 6 kombiniert ist, individuell vorgebbar einstellbar.

In den innerhalb des Behälters 1 bevorrateten flüssig-viskosen Stoff 2 ragt eine als Hohlleitung ausgebildete Leitung 7 ein, an deren anderem Leitungsende eine Sprühstoffdüse 8 angebracht ist.

Vermittels der externen Drucklufteinspeisung 5 wird ein bestimmt vorgebbarer Kammerdruck p₁ innerhalb der Druckkammer 4 vorgegeben, durch den der innerhalb des Behälters 1 bevorratete flüssig-viskose Stoff 2 durch die Leitung 7 gefördert und letztlich über die Sprühstoffdüse 8 unter Ausbildung eines Sprays 9 ausgetragen wird. In die Sprühstoffdüse 8 mündet zudem eine Druckluftleitung 10, die im gezeigten Ausführungsbeispiel mit der der Druckkammer 4 verbunden ist, so dass die innerhalb der Druckkammer 4 vorhandene Druckluft zur Drucklufteinspeisung in der Sprühstoffdüse 8 dient. Selbstverständlich ist es alternativ möglich die Druckluftleitung 10 mit einer zur Druckkammer 4 separaten Druckquelle zu verbinden.

Während der Sprühstoffabgabe über die Sprühstoffdüse 8 erfolgt mit Hilfe des vorzugsweise als Last- oder Wägezelle ausgebildeten Messgerätes 3 eine Gewichtsmessung, die kontinuierlich oder in vorgebbaren Zeitabständen vorgenommen wird. Die mit Hilfe des Messgerätes 3 generierten Messwerte werden im Rahmen einer Auswerte- sowie Regel-/Steuereinheit 11 zunächst verstärkt und unter Zugrundelegung einer Zielfunktion bewertet. Im Ergebnis werden in Abhängigkeit der erfassten Messwerte Steuer- oder Regelsignale erzeugt, die zur Nachjustierung des Kammerdruckes p₁ innerhalb der Druckkammer 4 der als Proportional-Regelventil ausgebildeten Einstelleinheit 6 zugeleitet werden. Die in der Figur als Einheit 11 dargestellte Auswerte- und Regel-/Steuereinheit kann in geeigneter Form auch in jeweils in separaten Funktionseinheiten ausgestaltet sein.

Ausgehend von einem maximalen Befüllungsniveau Y nähert sich der Flüssigkeitsspiegel des flüssig viskosen Stoffes 2 innerhalb des Behälters 1 während der Sprühstoffabgabe einem vorgegebenen Nachfüllniveau X an. Das Nachfüllniveau X liegt über der Mündungsöffnung der Leitung 7, um einen Lufteintritt in die Leitung 7 zu vermeiden. Wird das Nachfüllniveau X erreicht, das
mit Hilfe des Messgerätes 3 oder durch einen zusätzlich am Behälter 1 angebrachten Sensor 17, beispielsweise in Form eines Ultraschallsensors, detektierbar ist, so gilt es den Behälter 1 entsprechend nachzufüllen.

Die Befüllung des Behälters 1 kann grundsätzlich manuell erfolgen. Hierzu müsste ein Zugang durch die Druckkammer 4 vorgesehen sein. Um jedoch den Betrieb der Sprühstoffabgabe kontinuierlich und ohne größeren Zeitverzug, bedingt durch eine manuelle Befüllung des Behälters 1, bewerkstelligen zu können, erfolgt die Befüllung des Behälters 1 vorzugsweise über eine durch die Druckkammer 4 fluiddicht ragende und in den Behälter 1 mündende Füllleitung 12, die in Art eines Steigrohrs in ein flüssig-viskoses Stoffreservoir 13 innerhalb eines separaten Druckbehälters 14 mündet. Der innerhalb der Druckbehälters 14 vorherrschende Innendruck p₂, der über eine Druckluftzuführung 15 vorgebbar einstellbar ist, ist stets größer gewählt als der Kammerdruck p₁ innerhalb der Druckkammer 4. Längs der Füllleitung 12 ist optional ein Sperrventil 16 angeordnet.

Während der Befüllung des Behälters 1, die spätestens bei Erreichen des Nachfüllniveaus X erforderlich ist, gilt es sowohl die Sprühstoffabgabe zu unterbrechen. Zum Zwecke der Befüllung des Behälters 1 wird eine vorgegebene Menge an flüssig-viskosen Stoff 2 über die Füllleitung 12 aus dem Druckbehälter 14 in den Behälter 1 zugeführt. Sobald das maximale Befüllungsniveau Y innerhalb des Behälters 1 erreicht ist, wird der Füllvorgang beendet. Das Erreichen des maximalen Befüllungsniveaus Y wird vorzugsweise mit Hilfe des Messgerätes 3 detektiert. Vorzugsweise wird das Sperrventil 16 mit Hilfe eines durch die Auswerte- Regel-/Steuereinheit 11 erzeugten Steuersignals geschlossen. Die Kommunikation zwischen dem Sperrventil 16 und der Auswerte- und Regel-/Steuereinheit 11 erfolgt kabellos oder kabelgebunden.

Um eine Gewichtsmessung während der Befüllung durch den Einströmungsdruck über die Füllleitung 12 in den Behälter 1 nicht zu verfälschen, weist die Füllleitung 12 innerhalb des Behälters 1 eine seitlich orientierte Austrittsöffnung 18 auf, durch die der einströmende flüssig-viskose Stoff 2 keinen oder nur einen unbeachtlichen Strömungsdruck auf das Messgerät 3 ausübt.

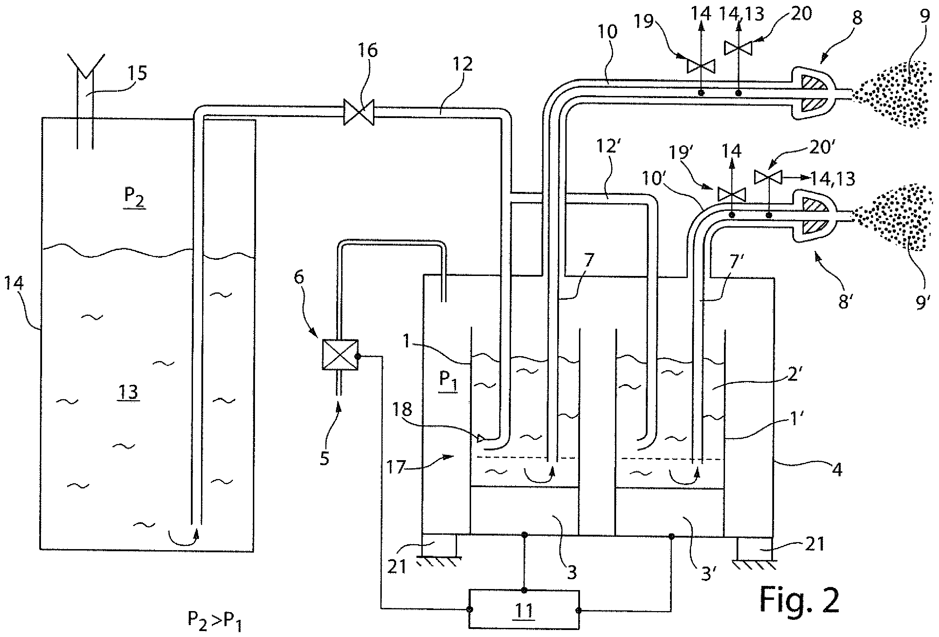

In Figur 2 ist ein weiteres Ausführungsbeispiel illustriert, das im Vergleich zu der in Figur 1 illustrierten Ausführungsform innerhalb der Druckkammer 4 einen weiteren Behälter 1' mit einem Messgerät 3' zur Gewichtsmessung vorsieht. Der weitere Behälter 1' ist repräsentativ für eine Vielzahl weiterer Behälter 1' anzusehen. Auf eine wiederholte Erläuterung der in Zusammenhang mit Figur 1 bereits beschriebenen Komponenten wird verzichtet.

In gleicher Weise wie der in Figur 1 illustrierte Behälter 1 gelangt zur Befüllung des weiteren Behälters 1' der flüssig-viskose Stoff 2 aus dem Stoffreservoir 13 über die Füllleitung 12, 12' in den weiteren Behälter 1'. Ferner mündet in den weiteren Behälter 1' die am Gehäuse der Druckkammer 4 befestigte Leitung 7', über die der flüssig-viskose Stoff 2' druckgetrieben zur Sprühstoffdüse 8' gefördert wird, in der unter Beimengung von Druckluft, die über die Druckluftleitung 10' zur Sprühstoffdüse 8 gelangt, ein Spray 9' erzeugt wird.

Um den Austrag des Sprays 9, 9' ohne Zeitverzögerung und sehr fein dosiert regeln zu können, ist in den Fluid führenden Leitungen 7, 7' jeweils eine zusätzliche Regel-/Steuerventileinheit, vorzugsweise in Form eines Proportionalregelventil 19, 19' angeordnet. Die Proportionalregelventile 19, 19' dienen jeweils zur Justierung des Förderdruckes für den jeweils auszutragenden flüssig-viskosen Stoff 2, 2', um bei unterschiedlichen Leitungslängen, die jeweils zu den separat ausgebildeten Sprühstoffdüsen 8, 8' führen, einen gleichen oder unterschiedlichen Medienaus- bzw. -auftrag einstellen zu können.

Um zu verhindern, dass es zu langen Einregelzeiten am Ort jeweils der Sprühstoffdüse 8, 8' kommt, zumal bei einer Drucksenkung vermittels einer Betätigung eines der Proportionalregelventile 19, 19' nur die Möglichkeit besteht, den Leitungsdruck innerhalb der jeweiligen Leitung 7, 7' in Strömungsrichtung nach den Proportionalregelventilen 19, 19' über die Sprühstoffdüse 8, 8' abzubauen, ist optional jeweils ein zusätzliches Proportionalregelventil 20, 20' längs der Leitung 7, 7', möglichst nah an der Sprühstoffdüse 8, 8' angeordnet, das jeweils den überschüssigen Leitungsdruck über eine rückführende Einspeisung eines überschüssigen flüssig-viskosen Stoffanteils in das Stoffreservoir 13 innerhalb des Druckbehälters 14 zurückführt.

Entsprechende Proportionalregelventile 19, 20 können auch in der in Figur 1 illustrierten Ausführungsform längs der dort dargestellten Leitung 7angeordnet werden, um Variationen bezüglich des Medienaustrages durch die Sprühstoffdüse 8 mit kurzem zeitlichen Ansprechverhalten vornehmen zu können.

In Figur 2 liegt die Druckkammer 4 zum Zwecke der Schwingungsentkopplung auf schwingungsdämpfenden Elementen 21 auf, durch die mögliche störende Schwingungseinflüsse auf die innerhalb der Druckkammer 4 angeordneten Messgeräte 3, 3' auszuschließen bzw. erheblich zu reduzieren sind. Aus Gründen der Vollständigkeit halber sei darauf hingewiesen, dass auch die in Fig. 1 illustrierte Druckkammer auf entsprechenden schwingungsdämpfenden Elementen 21 gelagert sein kann.

Alternativ zu oder in Kombination mit den schwingungsdämpfenden Elementen 21 kann die Druckkammer 4 über eine federbasierte Aufhängevorrichtung schwingungsentkoppelt von der Umgebung gelagert werden.

### Bezugszeichenliste

- 1, 1': Behälter
- 2, 2': flüssig-viskoser Stoff
- 3, 3': Messgerät
- 4: Druckkammer
- 5: Drucklufteinspeisung
- 6: Einstelleinheit
- 7, 7': Leitung
- 8, 8': Sprühstoffdüse
- 9, 9': Spray
- 10, 10': Druckluftleitung
- 11: Auswerte- und Regel-/Steuereinheit
- 12, 12': Füllleitung
- 13: flüssig-viskoses Stoffreservoir
- 14: Druckbehälter
- 15: Druckluftzuführung
- 16: Sperrventil
- 17: Sensor
- 18: Austrittsöffnung
- 19, 19': Proportionalregelventil, Regel-/Steuerventileinheit
- 20, 20': Proportionalregelventil, Regel-/Steuerventileinheit
- 21: Schwingungsdämpfendes Element
- X: Nachfüllniveau
- Y: maximales Befüllungsniveau

## Patentansprüche

1. Vorrichtung zur mengendosierten Sprühstoffabgabe eines flüssigviskosen Stoffes (2), der mittels einer Sprühstoffdüse (8) in Form eines Sprays (9) emittierbar ist, mit einem Behälter (1), in dem der flüssigviskose Stoff (2) bevorratet ist, einem in oder an dem Behälter (1) angebrachten Messgerät (3) zur Bestimmung der Gewichtskraft des in dem Behälter (1) bevorrateten flüssigviskosen Stoffes (2) sowie zum Erzeugen wenigstens eines von der Gewichtskraft abhängigen Messwertes, wenigstens einer aus dem Behälter (1) führenden Leitung (7), die derart ausgebildet und angeordnet ist, so dass durch die Leitung (7) der in dem Behälter (1) bevorratete flüssigviskose Stoff (2) Druck-getrieben mittel- oder unmittelbar der Sprühstoffdüse (8. 8') zuführbar ist, und mit einer Auswerte- und Regel-/Steuereinheit (11), die auf der Grundlage des wenigstens einen Messwertes oder einer von diesem abgeleiteten Größe eine Einheit zur Einstellung des Druckes aktiviert,
wobei eine Druckkammer (4) vorgesehen ist, in der ein gegenüber eines atmosphärischen Umgebungsdruckes erhöhter, einstellbarer Kammerdruck herrscht und in der der Behälter (1) mit dem flüssigviskosen Stoff (2) angeordnet ist,
wobei die wenigstens eine Leitung (7) mechanisch zum Behälter (1) entkoppelt an der Druckkammer (4) derart angebracht ist und diese durchragt, so dass durch die Leitung (7) der in dem Behälter (1) innerhalb der Druckkammer (4) bevorratete flüssigviskose Stoff (2) kammerdruckgetrieben mittel- oder unmittelbar der Sprühstoffdüse (8) zuführbar ist,
**dadurch gekennzeichnet, dass** das Messgerät (3) in oder an der Druckkammer (4) derart angebracht ist, dass das Messgerät (3) ausschließlich die Gewichtskraft des Behälters (1) und die des darin bevorrateten Stoffes (2) bestimmt und
dass durch die Druckkammer (4) eine Füllleitung (12) fluiddicht führt, die einerseits in den Behälter (1) mündet und andererseits in Art eines Steigrohrs in den innerhalb eines Druckbehälter (14) bereitgestellten flüssigviskosen Stoff (2) mündet.

2. Vorrichtung nach Anspruch 1,
**dadurch gekennzeichnet, dass** die Sprühstoffdüse (8) über eine weitere Leitung (10) mit einer Überdruckquelle verbunden ist, über die Druck-beaufschlagte Luft der Sprühstoffdüse (8) zuführbar ist, die zusammen mit dem flüssigviskosen Stoff (2) zur Ausbildung des Sprays (9) dient.

3. Vorrichtung nach Anspruch 1 oder 2,
**dadurch gekennzeichnet, dass** die Auswerte- und Regel-/Steuereinheit (11) auf der Grundlage des wenigstens einen Messwertes sowie einer Zielfunktion die Einheit zur Einstellung des Druckes aktiviert.

4. Vorrichtung nach einem der Ansprüche 1 bis 3,
**dadurch gekennzeichnet, dass** die Sprühstoffdüse (8) über eine weitere Leitung mit der Druckkammer (4) verbunden ist, über die aus der Druckkammer (4) Druck-beaufschlagte Luft der Sprühstoffdüse (8) zuführbar ist, die zusammen mit dem flüssigviskosen Stoff zur Ausbildung des Sprays (9') dient.

5. Vorrichtung nach einem der Ansprüche 1 bis 4,
**dadurch gekennzeichnet, dass** die Einheit zur Einstellung des Kammerdruckes ein Regel-/Steuerventil (19, 20) aufweist, das längs einer Zuleitung (10) angeordnet ist, die die Druckkammer (4) mit einer Druckluftquelle verbindet.

6. Vorrichtung nach einem der Ansprüche 1 bis 5,
**dadurch gekennzeichnet, dass** innerhalb des Druckbehälters (14) ein Innendruck vorherrscht, der größer als der Kammerdruck ist.

7. Vorrichtung nach einem der Ansprüche 1 bis 6,
**dadurch gekennzeichnet, dass** längs der Füllleitung (12) eine Absperreinheit (16) angeordnet ist.

8. Vorrichtung nach einem der Ansprüche 3 bis 7,
**dadurch gekennzeichnet, dass** die Zielfunktion eine vorgebbare Mengendosierung umfasst, mit der der flüssigviskose Stoff (2) im Wege einer Stoffabgabe über die wenigstens eine Leitung (7) austragbar ist.

9. Vorrichtung nach einem der Ansprüche 1 bis 8,
**dadurch gekennzeichnet, dass** in gleicher Weise wie der mit dem flüssigviskosen Stoff (2) befüllte Behälter (1) samt Messgerät (3) wenigstens ein weiterer mit dem flüssigviskosen Stoff (2') befüllter Behälter (1') samt Messgerät (3') innerhalb der Druckkammer (4) angeordnet sind, der über eine separate Leitung (7') den in dem weiteren Behälter (1') bevorrateten flüssigviskosen Stoff (2') Druck-getrieben mittel- oder unmittelbar einer separaten Sprühstoffdüse (8') zuführt.

10. Vorrichtung nach einem der Ansprüche 1 bis 9,
**dadurch gekennzeichnet, dass** längs der aus dem Behälter (1) führenden Leitung (7), durch die der in dem Behälter (1) bevorratete flüssigviskose Stoff (2) Druck-getrieben mittel- oder unmittelbar der Sprühstoffdüse (8) zuführbar ist, eine Regel-/Steuerventileinheit (19, 20,) angeordnet ist, und/oder
dass längs der aus dem wenigstens einen weiteren Behälter (1') führenden Leitung (7'), durch die der in dem weiteren Behälter (1') bevorratete flüssigviskose Stoff (2') Druck-getrieben mittel- oder unmittelbar der separaten Sprühstoffdüse (8') zuführbar ist, eine Regel-/Steuerventileinheit (19', 20') angeordnet ist

11. Vorrichtung nach Anspruch 1 und 10,
**dadurch gekennzeichnet, dass** die Regel-/Steuerventileinheit (19, 20) wenigstens ein Proportionalventil umfasst, das einen mit der aus dem Behälter (1) oder dem wenigstens einen weiteren Behälter (1) führenden Leitung (7, 7') verbundenen Ventileingang und einen mittel- oder unmittelbar mit dem Druckbehälter (4) fluidisch verbundenen Ventilausgang besitzt.

12. Vorrichtung nach einem der Ansprüche 1 bis 11,
**dadurch gekennzeichnet, dass** die Druckkammer (4) samt des wenigstens einen in der Druckkammer (4) angeordneten Behälters (1, 1') mit Messgerät (3, 3') schwingungsentkoppelt von der Umgebung gelagert ist.

13. Verwendung der Vorrichtung nach einem der Ansprüche 1 bis 12 zur Minimalmengen-Kühlschmiervorrichtung zum Schmieren und Kühlen an Kühlmittelschmierorten, an denen spanende oder umformende Werkzeuge auf Werkstücke einwirken.

14. Verwendung nach Anspruch 13,
**dadurch gekennzeichnet, dass** die Minimalmengen-Kühlschmiervorrichtung einen Stoffaustrag mit einer Mengenausgabe von 1/100 Gramm pro Minute bis 10 Gramm pro Minute realisiert.

15. Verwendung nach Anspruch 13 oder 14,
**dadurch gekennzeichnet, dass** als flüssigviskoser Stoff Mineralöle, Mineralölerstraffinate, Hochleistungsschneidöle verwendet wird.

## Claims

1. A device for the quantity-dosed spray delivery of a liquid viscous substance (2), which can be emitted by means of a spray nozzle (8) in the form of a spray (9), having a container (1), in which the liquid viscous substance (2) is stored, a measuring device (3) positioned in or on the container (1) for determining the weight of the liquid viscous substance (2) stored in the container (1) and for creating at least one measured value dependent on the weight, at least one line (7) leading out of the container (1), which is constructed and arranged in such a manner that the liquid viscous substance (2) stored in the container (1) can be supplied to the spray nozzle (8, 8') through the line (7) indirectly or directly in a pressure-driven manner, and having an evaluation and closed-/open-loop control unit (11), which activates a unit for adjusting the pressure on the basis of the at least one measured value or a value derived from the same, a pressure chamber (4) being provided, in which an adjustable chamber pressure prevails, which is increased compared to an atmospheric ambient pressure, and in which the container (1) with the liquid viscous substance (2) is arranged, the at least one line (7) being positioned, mechanically decoupled with respect to the container (1), in such a manner on the pressure chamber (4) and penetrating the same, that the liquid viscous substance (2) stored in the container (1) inside the pressure chamber (4) can be supplied to the spray nozzle (8) through the line (7) indirectly or directly in a chamber-pressure-driven manner,
**characterized in that** the measuring device (3) is positioned in or on the pressure chamber (4) in such a manner that the measuring device (3) exclusively determines the weight of the container (1) and that of the substance (2) stored therein, and
**in that** a fill line (12) leads through the pressure chamber (4) in a fluid-tight manner, which on one side opens into the container (1) and on the other side opens in the manner of a riser pipe into the liquid viscous substance (2) provided inside a pressure vessel (14).

2. The device according to Claim 1,
**characterized in that** the spray nozzle (8) is connected by means of a further line (10) to an overpressure source, by means of which pressurized air can be supplied to the spray nozzle (8), which is used together with the liquid viscous substance (2) to form the spray (9) .

3. The device according to Claim 1 or 2,
**characterized in that** the evaluation and closed-/open-loop control unit (11) activates the unit for adjusting the pressure on the basis of the at least one measured value and an objective function.

4. The device according to one of Claims 1 to 3,
**characterized in that** the spray nozzle (8) is connected by means of a further line to the pressure chamber (4), by means of which pressurized air can be supplied from the pressure chamber (4) to the spray nozzle (8), which is used together with the liquid viscous substance to form the spray (9').

5. The device according to one of Claims 1 to 4, **characterized in that** the unit for adjusting the chamber pressure has a regulating/control valve (19, 20), which is arranged along a supply line (10), which connects the pressure chamber (4) to a compressed air source.

6. The device according to one of Claims 1 to 5,
**characterized in that** an internal pressure, which is greater than the chamber pressure, prevails inside the pressure vessel (14).

7. The device according to one of Claims 1 to 6,
**characterized in that** a shut-off unit (16) is arranged along the fill line (12).

8. The device according to one of Claims 3 to 7,
**characterized in that** the objective function comprises a predeterminable quantity dosing, using which the liquid viscous substance (2) can be discharged via the at least one line (7) in the course of substance delivery.

9. The device according to one of Claims 1 to 8,
**characterized in that**, in the same way as the container (1) filled with the liquid viscous substance (2) together with measuring device (3), at least one further container (1') filled with the liquid viscous substance (2') together with measuring device (3') are arranged inside the pressure chamber (4), which further container supplies the liquid viscous substance (2') stored in the further container (1') to a separate spray nozzle (8') via a separate line (7') indirectly or directly in a pressure-driven manner.

10. The device according to one of Claims 1 to 9,
**characterized in that** a regulating/control valve unit (19, 20) is arranged along the line (7) leading out of the container (1), through which the liquid viscous substance (2) stored in the container (1) can be supplied to the spray nozzle (8) indirectly or directly in a pressure-driven manner, and/or
**in that** a regulating/control valve unit (19', 20') is arranged along the line (7') leading out of the at least one further container (1'), through which the liquid viscous substance (2') stored in the further container (1') can be supplied to the separate spray nozzle (8') indirectly or directly in a pressure-driven manner.

11. The device according to Claims 1 and 10,
**characterized in that** the regulating/control valve unit (19, 20) comprises at least one proportioning valve, which has a valve inlet connected to the line (7, 7') leading out of the container (1) or the at least one further container (1) and a valve outlet fluidically connected indirectly or directly to the pressure vessel (4) .

12. The device according to one of Claims 1 to 11,
**characterized in that** the pressure chamber (4) together with the at least one container (1, 1') arranged in the pressure chamber (4) with measuring device (3, 3') is mounted such that it is vibration-decoupled from the environment.

13. The use of the device according to one of Claims 1 to 12 for a minimum-quantity cooling/lubricating device for lubricating and cooling at coolant lubrication sites, at which cutting or forming tools act on workpieces.

14. The use according to Claim 13,
**characterized in that** the minimum-quantity cooling/lubricating device realizes a substance output with a quantity output of 1/100 gram per minute to 10 grams per minute.

15. The use according to Claim 13 or 14,
**characterized in that** mineral oils, mineral oil primary raffinates, high performance cutting oils are used as fluid viscous substance.

## Revendications

1. Dispositif de sortie de produit pulvérisé à dosage de quantité d'un produit visqueux liquide (2), qui peut être émis au moyen d'une buse de produit pulvérisé (8) sous la forme d'un pulvérisateur (9), avec un contenant (1), dans lequel le produit visqueux liquide (2) est stocké, un appareil de mesure (3) monté dans ou sur le contenant (1) pour la détermination du poids du produit visqueux liquide (2) stocké dans le contenant (1) ainsi que pour la production d'au moins une valeur de mesure dépendant du poids, au moins une conduite (7) venant du contenant (1), qui est constituée et disposée de telle manière que le produit visqueux liquide (2) stocké dans le contenant (1) peut être acheminé par la conduite (7) entraîné par la pression indirectement ou directement à la buse de produit pulvérisé (8, 8') et avec une unité de commande d'évaluation et de régulation (11), qui active sur la base d'au moins une valeur de mesure ou d'une valeur dérivée de celle-ci, une unité destinée au réglage de la pression,
sachant qu'une chambre sous pression (4) est prévue dans laquelle il règne une pression de chambre pouvant être réglée, augmentée par rapport à une pression ambiante atmosphérique et dans laquelle est disposé le contenant (1) avec le produit visqueux liquide (2),
sachant qu'au moins une conduite (7) est montée mécaniquement au contenant (1) découplée sur la chambre sous pression (4) et traverse celle-ci de telle manière que le produit visqueux liquide (2) stocké dans le contenant (1) à l'intérieur de la chambre sous pression (4) peut être acheminé par la conduite (7) propulsé par la pression de chambre indirectement ou directement à la buse de produit pulvérisé (8),
**caractérisé en ce que** l'appareil de mesure (3) est monté dans ou sur la chambre sous pression (4) de telle manière que l'appareil de mesure (3) détermine exclusivement le poids du contenant (1) et celui du produit (2) stocké dedans et **en ce qu'**une conduite de remplissage (12) passe de façon étanche aux fluides par la chambre sous pression (4), qui débouche d'une part dans le contenant (1) et débouche d'autre part sous la forme d'un conduit ascendant dans le produit visqueux liquide (2) fourni à l'intérieur d'un conteneur sous pression (14).

2. Dispositif selon la revendication 1,
**caractérisé en ce que** la buse de produit pulvérisé (8) est reliée par une autre conduite (10) à une source de surpression par le biais de laquelle peut être acheminé de l'air mis sous pression à la buse de produit pulvérisé (8), qui sert avec le produit visqueux liquide (2) à la constitution du pulvérisateur (9).

3. Dispositif selon la revendication 1 ou 2,
**caractérisé en ce que** l'unité de commande d'évaluation et de régulation (11) active l'unité de réglage de la pression sur la base d'au moins une valeur de mesure ainsi que d'une fonction ciblée.

4. Dispositif selon l'une quelconque des revendications 1 à 3,
**caractérisé en ce que** la buse de produit pulvérisé (8) est reliée par le biais d'une autre conduite à la chambre sous pression (4) par laquelle l'air mis sous pression venant de la chambre sous pression (4) peut être acheminé à la buse de produit pulvérisé (8), qui sert avec le produit visqueux liquide à la formation du pulvérisateur (9').

5. Dispositif selon l'une quelconque des revendications 1 à 4,
**caractérisé en ce que** l'unité de réglage de la pression de chambre comporte une soupape de régulation/commande (19, 20), qui qui est disposée le long d'une conduite d'alimentation (10), qui relie la chambre sous pression (4) à la source d'air comprimé.

6. Dispositif selon l'une quelconque des revendications 1 à 5,
**caractérisé en ce qu'**une pression intérieure prédomine à l'intérieur du conteneur sous pression (14), qui est supérieure à la pression de chambre.

7. Dispositif selon l'une quelconque des revendications 1 à 6,
**caractérisé en ce qu'**une unité de retenue (16) est disposée le long de la conduite de remplissage (12).

8. Dispositif selon l'une quelconque des revendications 3 à 7,
**caractérisé en ce que** la fonction ciblée comprend un dosage de quantité prédéfinissable avec lequel le produit visqueux liquide (2) peut être extrait au cours d'une sortie de produit par au moins une conduite (7).

9. Dispositif selon l'une quelconque des revendications 1 à 8,
**caractérisé en ce que** de la même façon que pour le contenant (1) rempli de produit visqueux liquide (2) avec appareil de mesure (3), au moins un autre contenant (1') rempli de produit visqueux liquide (2') avec appareil de mesure (3') sont disposés à l'intérieur de la chambre sous pression (4), qui achemine par une conduite séparée (7') le produit visqueux liquide (2') stocké dans l'autre contenant (1') propulsé par la pression indirectement ou directement à une buse de produit pulvérisé séparée (8').

10. Dispositif selon l'une quelconque des revendications 1 à 9,
**caractérisé en ce qu'**une unité de soupape de commande/régulation (19, 20) est disposée le long de la conduite (7) venant du contenant (1) à travers laquelle le produit visqueux liquide (2) stocké dans le contenant (1) peut être acheminé propulsé par la pression indirectement ou directement à la buse de produit pulvérisé (8), et/ou
**en ce qu'**une unité de soupape de commande/régulation (19', 20') est disposée le long de la conduite (7') venant d'au moins un autre contenant (1') à travers laquelle le produit visqueux liquide (2') stocké dans l'autre contenant (1') peut être acheminé propulsé par la pression indirectement ou directement à la buse de produit pulvérisé séparée (8').

11. Dispositif selon les revendications 1 et 10,
**caractérisé en ce que** l'unité de soupape de commande/ régulation (19, 20) comprend au moins une soupape proportionnelle, qui possède une entrée de soupape reliée à la conduite (7, 7') venant du contenant (1) ou d'au moins un autre contenant (1) et une sortie de soupape reliée du point de vue fluide indirectement ou directement au conteneur sous pression (4).

12. Dispositif selon l'une quelconque des revendications 1 à 11,
**caractérisé en ce que** la chambre sous pression (4) plus au moins un contenant (1, 1') disposé dans la chambre sous pression (4) avec appareil de mesure (3, 3') est logée découplée de toutes vibrations de l'environnement.

13. Utilisation du dispositif selon l'une quelconque des revendications 1 à 12, pour le dispositif de lubrification à froid à quantités minimales pour lubrifier et refroidir des endroits de lubrification par agent frigorigène auxquels des outils travaillant par enlèvement de copeaux ou par déformation agissent sur des pièces.

14. Utilisation selon la revendication 13,
**caractérisée en ce que** le dispositif de lubrification à froid à quantités minimales réalise un débit de produit avec une délivrance de quantité de 1/100 gramme par minute à 10 grammes par minute.

15. Utilisation selon la revendication 13 ou 14,
**caractérisée en ce que** des huiles minérales, des produits de premier raffinage à base d'huiles minérales, des huiles de coupe à hautes performances sont utilisés en tant que produit visqueux liquide.
